# EUROPEAN PATENT SPECIFICATION

(11) **EP 1 576 916 B1**
(45) Date of publication and mention of the grant of the patent: **24.10.2007**
(21) Application number: 05102076.6
(22) Date of filing: 16.03.2005
(51) Int. Cl.: B26D 3/26, A47J 43/044

(54) **Food chopper**
Hacker für Lebensmittel
Hacheur pour des produits alimentaires

(30) Priority: 16.03.2004 US 554047 P; 23.02.2005 US 65339
(43) Date of publication of application: 21.09.2005
(73) Proprietor: DKB Household AG, 8050 Zürich (CH)
(72) Inventor: Yurchenco, James, 94303, Palo Alto (US); Overthun, Thomas, 94117, San Francisco (US); Cheng, Larry, 94303, Palo Alto (US); Miksovsky, Christopher A., 94117, San Francisco (US); Houston, Jonah L., 94301, Palo Alto (US); Papadopoulos, Annetta, 94301, Palo Alto (US); Luomanen, Christopher A., 94110, San Francisco (US)
(74) Representative: BOVARD AG

(56) References cited:
- CH-A- 345 985
- GB-A- 2 287 174

## Description

### Technical Field

This invention relates generally to kitchen tools. More particularly, this invention relates to a chopper of the type that can be used to chop food items.

### Background of the Invention

Food choppers for home kitchen use are known in a wide variety of design configurations. These devices are used to prepare food items, for instance peeled onions, by placing the food item on a board or in an attached cup. Using a reciprocating plunger mechanism, the food item is then chopped by pushing the handle repeatedly by hand until the desired fineness is achieved. The handle is connected to a plunger mechanism, which is typically attached to a blade and a mechanism that turns the blade slightly so that the blade strikes the food item to be chopped at a different angle with every stoke. A spring biases the plunger back to a starting position after each chopping stroke. Prior art food choppers are best represented by the document GB 2287174 A.

There exist some shortcomings with these known choppers in that the handle may rub uncomfortably in the user's hand as the chopping and rotating movements occur, and the device is sometimes difficult to clean. Also, it is desirable to allow the user to lock the chopping device in a down position for more compact storage of the chopper.

### Summary of the Invention

According to one aspect of the present invention, a food chopper includes a body part having a body tube, a cap assembly slidably attached to a first side of the body tube for sliding movement with respect to the body part, a shuttle slidably attached to a second side of the body tube for helical sliding movement with respect to the body part, a plunger rotably attached to the cap assembly and the shuttle for sliding movement with respect to the body part and rotational movement with respect to the cap assembly and the body part, and a blade attached to the plunger. Pushing the cap assembly down enables the blade to slide down with respect to the body part. Releasing the cap assembly enables the blade to slide up with respect to the body part and allows the blade to rotate with respect to the body part and the cap assembly.

According to a further aspect of the invention, a method of locking down the food chopper includes pressing down on the cap assembly. The food chopper further includes a locking ring rotatably attached to a proximal end of the body part for rotational movement with respect to the body part. The locking ring includes a locking switch that is configured to rotate between an open position and a closed position within a window opening of the body part. When the cap assembly is pressed down, rotating the locking switch from the open position to the closed position prevents the cap assembly from sliding up with respect to the body part upon release of the cap assembly.

According to yet another aspect of the invention, a method of unlocking the food chopper includes rotating the locking switch from the closed position to the open position when the cap assembly of the food chopper is locked down to the body part. The cap assembly is then raised up with respect to the body part.

### Brief Description of the Drawings

FIG. 1A depicts a top perspective view of an embodiment of a food chopper in a closed configuration in accordance with the present invention.
FIG. 1 B depicts FIG. 1A in an extended configuration.
FIG. 1C depicts a bottom perspective view of FIG. 1A.
FIG. 2A depicts a cross-sectional front view of the food chopper of FIG. 1A.
FIG. 2B depicts a cross-sectional front view of the food chopper of FIG. 1B.
FIG. 3A depicts a closed up side view of FIG. 2A.
FIG. 3B depicts a closed up view of FIG. 2B.
FIG. 4 depicts a perspective view of FIG. 3B.
FIG. 5A depicts a top perspective view of a cap top to be used in the food chopper of FIG. 1A.
FIG. 5B depicts a bottom perspective view of FIG. 5A.
FIG. 6 depicts a perspective view of a name badge to be used in the cap top of FIG. 5A.
FIG. 7 depicts a perspective view of an advancing tube to be used in the food chopper of FIG. 1A.
FIG. 8 depicts a perspective view of an upper body part to be used in the food chopper of FIG. 1A.
FIG. 9 depicts a perspective view of a shuttle to be used in the food chopper of FIG. 1A.
FIG. 10 depicts a perspective view of a locking ring to be used in the food chopper of FIG. 1A.
FIG. 11A depicts a dissected view of FIG. 1A
FIG. 11B depicts a dissected view of FIG. 1B
FIG. 12 depicts a perspective view of a plunger to be used in the food chopper of FIG. 1A.
FIG. 13 depicts a perspective view of a symmetrical blade to be used in the food chopper of FIG. 1A.
FIG. 14A depicts a top perspective view of a blade guide system to be used in the food chopper of FIG. 1A.
FIG. 14B depicts a bottom perspective view of FIG. 14A.
FIG. 15A depicts a perspective view of a cup and cup pads to be used in the food chopper of FIG. 1A.
FIG. 15B depicts FIG. 15A wherein the cup pads are stacked.

### Detailed Description

A better understanding of the present invention will now be had upon reference to the following detailed description, when read in conjunction with the accompanying drawings, wherein like reference characters refer to like parts throughout the several views of the present invention.

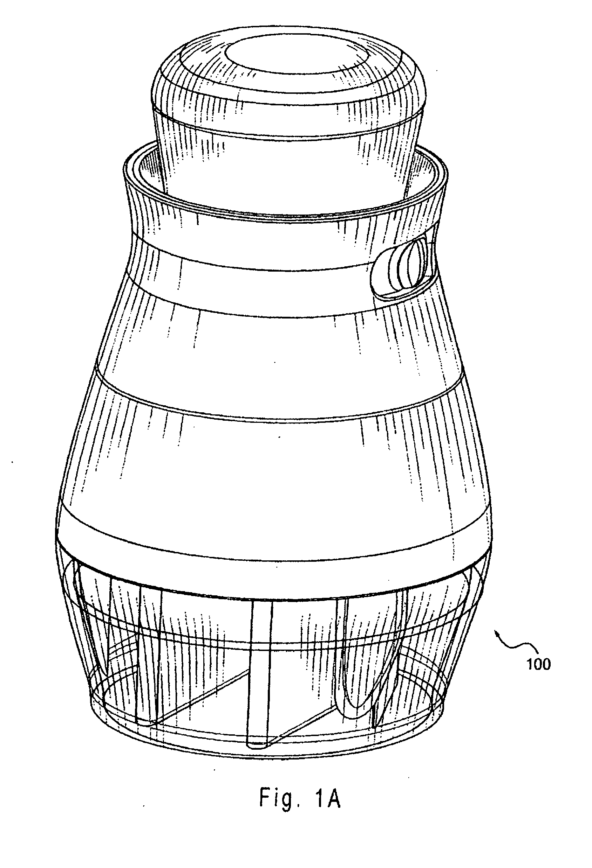

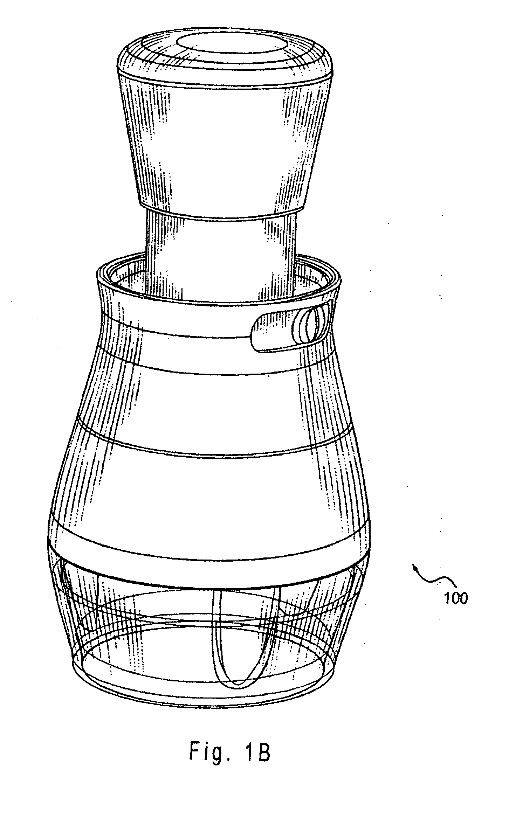

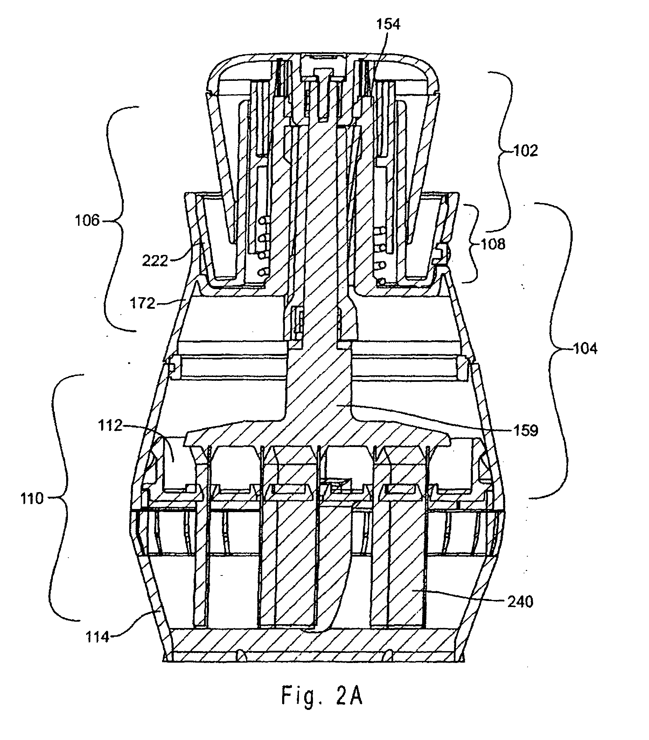

The food chopper 100 according to an embodiment of the present invention is depicted in FIGs. 1A, 1B and 2A. As shown in FIG. 2A, the food chopper 100 includes a cap assembly 102, a body part 104, an actuation mechanism 106, a locking mechanism 108, a chopping assembly 110, a blade guard system 112 and a cup 114. The food chopper 100 allows food items to be chopped by blades approaching at various angles each time the cap assembly 102 is pressed down. Furthermore, the food chopper 100 does not rub on the user's hand during the release of the cap assembly 102. The cap assembly 102 may also be locked down for compact storage.

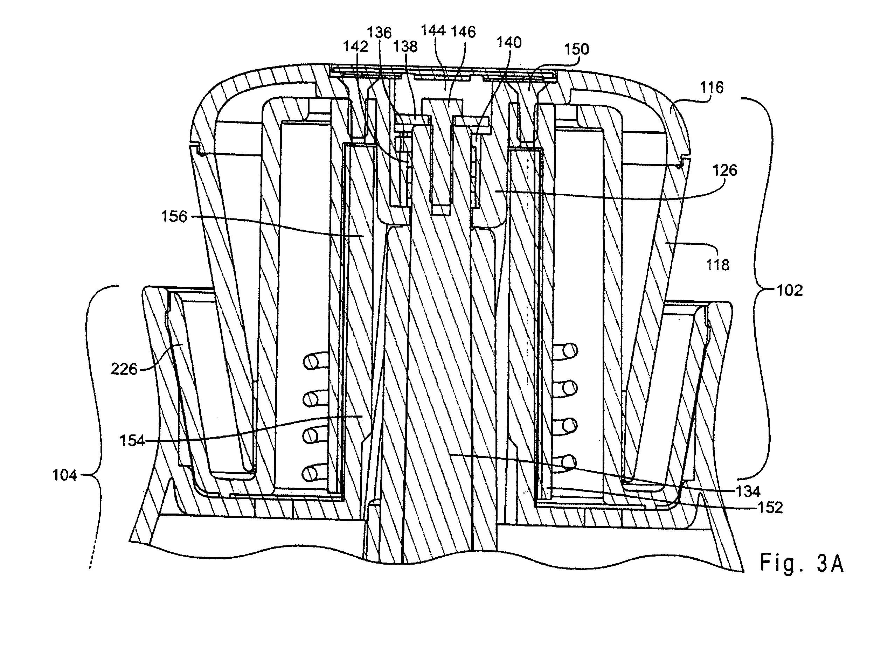

Referring to FIG. 3A, the cap assembly 102 of the food chopper 100 includes a cap top member 116, a cap side collar 118 attached to the cap top member 116, and an advancing tube 152 attached to the cap top member 116. The cap top member 116 defines the top of the cap assembly 102 and the cap side collar 118 defines the side of the cap assembly 102. Preferably, the cap top member 116 is substantially circular and cup-like in shape, although other shapes may be used. Preferably, the cap top member 116 and the cap side collar 118 are made of Acrylonitrile Butadiene Styrene (ABS). However, other materials known in the art may be used.

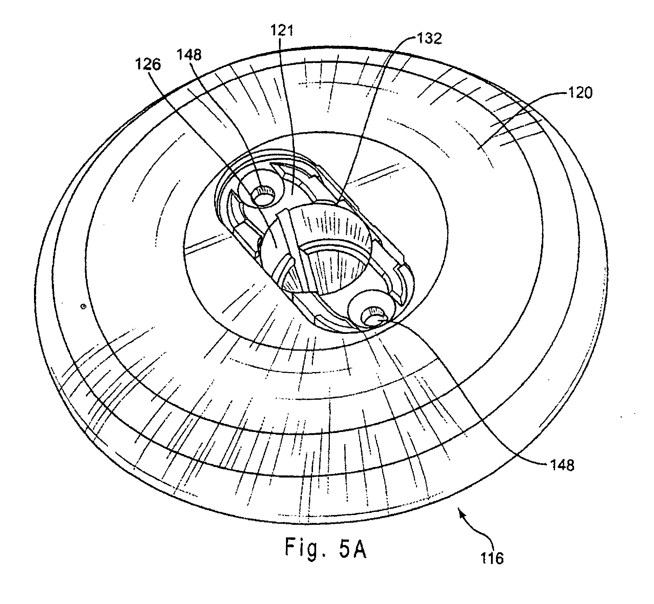

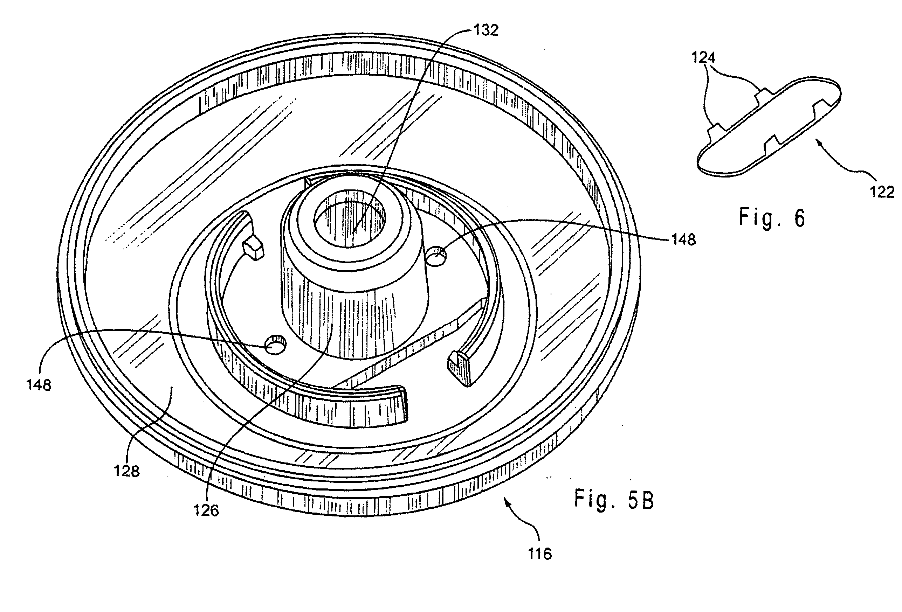

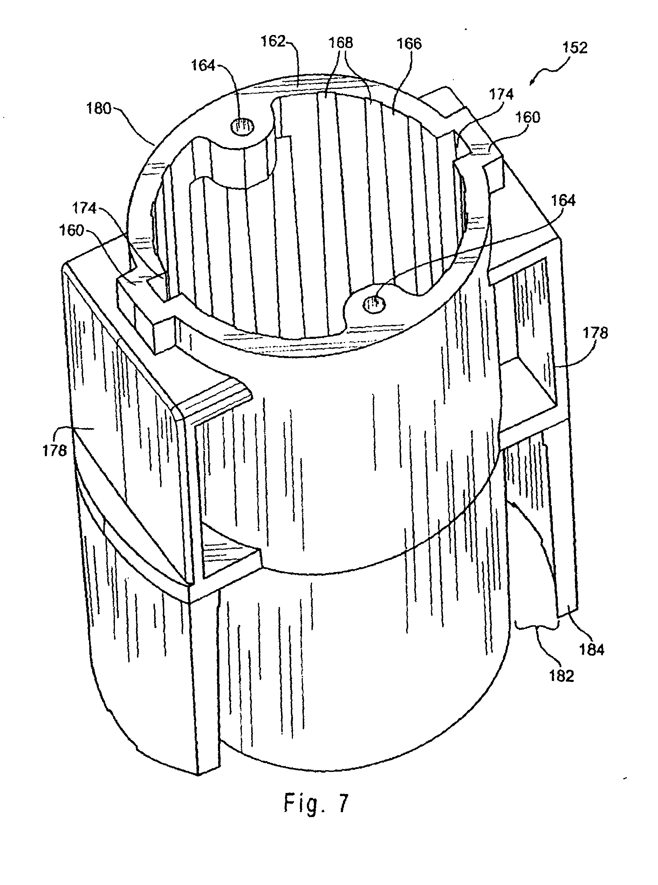

FIGs. 5A and 5B show the upperside 120 and the underside 128 of the cap top member 116, respectively. The cap top member 116 includes a cap tube 126 on the underside side 128. The cap tube 126 also defines an opening 132 that is configured for a blade shaft 134 (not shown) to pass through. The cap top member 116 also includes a pair of screw slots 148 that are configured for screws to pass through the screw slots 148 and secure the cap top member 116 to the advancing tube 152. The cap top member 116 also includes an indentation 121 on the upperside side 120 that is configured to house a name badge cover 122, such as a Zyliss badge depicted in FIG. 6. The name badge cover 122 may contain hooks 124 to secure itself to the cap top member 116. Preferably, four hooks are used, although any number may be used. The cover 122 covers the indentation 121 and provides a cosmetically pleasing appearance.

Referring back to FIG. 3A, the cap tube 126 further defines an internal shoulder 136 that is configured to abut a blade shaft washer 138 and defines a slot 140 that is configured to house a blade shaft advance wrap spring 142. The blade shaft advance wrap spring 142 wraps around the blade shaft 134 and to permit the blade shaft 134 to rotate in one angular direction only. The shoulder 136 limits the movement of the blade shaft washer 138, and prevents the blade shaft washer 138 from contacting the blade shaft advance wrap spring 142. A clearance 144 is defined within the cap tube 126 to provide an area for the placement of the blade shaft washer 138 and a blade shaft screw 146. The blade shaft screw 146 is configured to secure the blade shaft washer 138 to the blade shaft 134. Therefore, the blade shaft 134 may rotate freely within the clearance 144 of the cap tube 126 independent of the cap assembly 102. Consequently, the food chopper 100 may be operated so that the cap assembly 102 does not rotate relative to the body part 104, which provides comfort to the user operating the food chopper 100. This will be discussed in more detail below. It is noted that the cap assembly screws 150 are used to secure the cap top member 116 to the advancing tube 152.

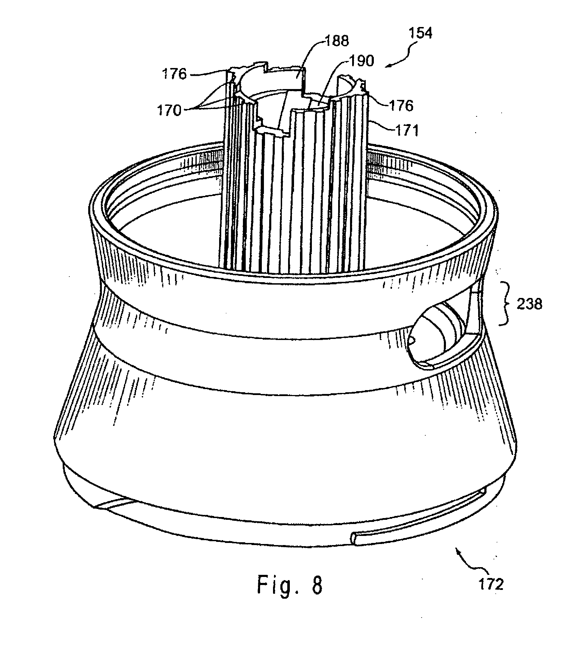

FIG. 7 illustrates the advancing tube 152, which is configured to operate with a body tube 154 of an upper body part 172, as depicted in FIG. 8. The advancing tube 152 is a substantially cylindrical tube having two shoulders 160 around a proximal end 162. It is noted that the shoulders 160 are used to operate the locking mechanism 108, which will be discussed in more detail below. Preferably, the advancing tube 152 is made of nylon. However, other materials known in the art may be used.

The advancing tube 152 includes two apertures 164 that are configured for cap assembly screws 150 (not shown) to pass through. An inner surface 166 of the advancing tube 152 defines a plurality of slots 168 that are configured to match with a plurality of corresponding protrusions 170 on an outer surface 171 of the body tube 154 (shown in FIG. 8). Among the slots 168 are two keyways 174 adjacent the shoulders 160 that are configured to align and form a close fit with two corresponding elongated protrusions 176 on the body tube 154 (shown in FIG. 8). Consequently, the advancing tube 152 is prevented from rotation but can move vertically relative to the body tube 154.

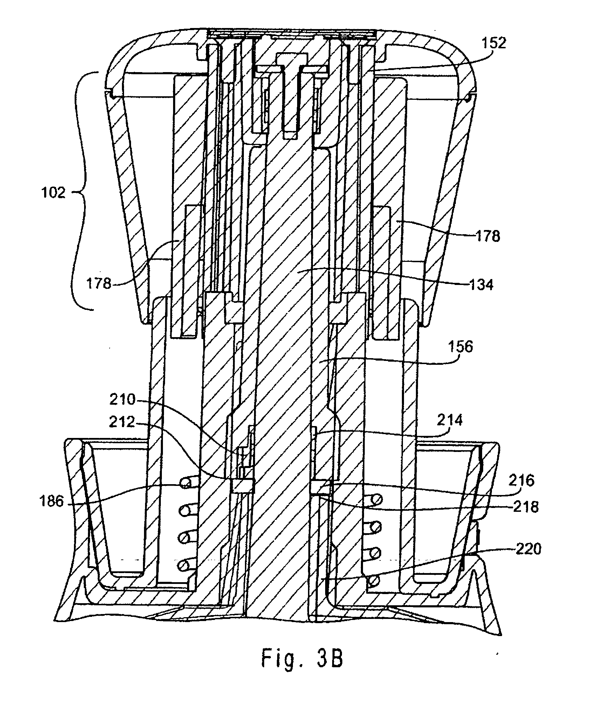

The advancing tube 152 also includes a pair of arms 178 equally spaced on an outer surface 180 of the advancing tube 152. The arms 178 together define an area 182 near the distal end 184 where a main spring 186 may be located. The main spring 186 is depicted in FIG. 3B, which is configured to bias upwardly against the arms 178 of the advancing tube 152, and is responsible for lifting the cap assembly 102 during release and maintaining the cap assembly 102 at an extended configuration. Preferably, the main spring 186 is made of stainless steel. However, other materials known in the art may be used.

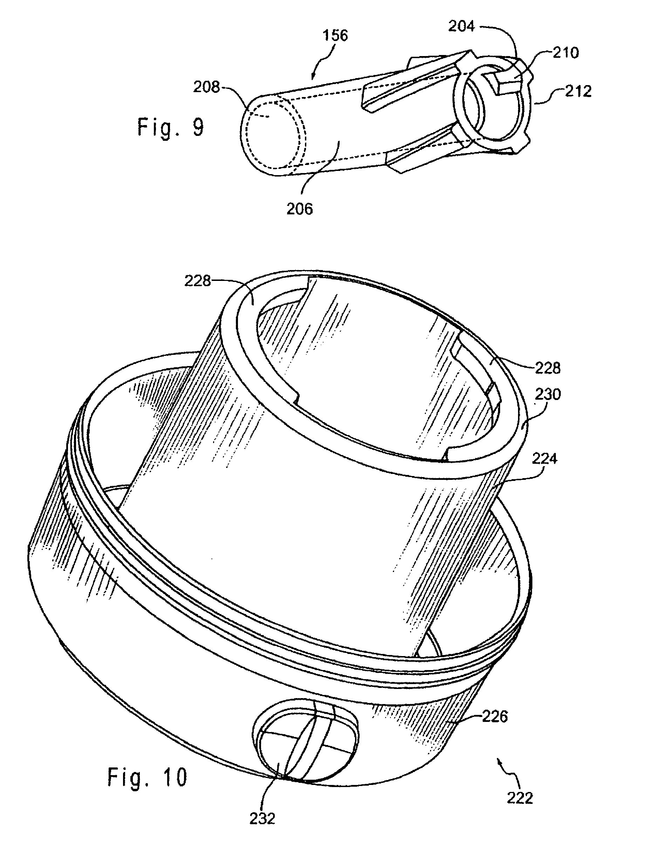

The actuation mechanism 106 of the food chopper 100 includes the body tube 154 and a shuttle 156. The body tube 154 is shown in FIG. 8 and the shuttle is shown in FIG. 9. The body tube 154 extends from around the center of the upper body part 172. The outer surface 171 of the body tube 154 includes a plurality of protrusions 170 to guide the advancing tube 152, as mentioned previously. The inner surface 188 of the body tube 154 includes a plurality of grooves 190 helically formed that are configured to correspond to the corresponding helically formed protrusions 204 on the shuttle 156 (shown in FIG. 9). The grooves 190 allow the rotation of the shuttle 156 as it slides along the grooves 190. Preferably, the inner surface 188 of the body tube 154 includes four helically formed grooves 190, although other number may be used. As depicted in FIG. 9, the shuttle 156 defines a longitudinally extending opening 208 that is configured for the blade shaft 134 (not shown) to pass through. The shuttle 156 also defines a slot 210 around a distal end 212 to house another blade shaft advance wrap spring 214 (not shown).

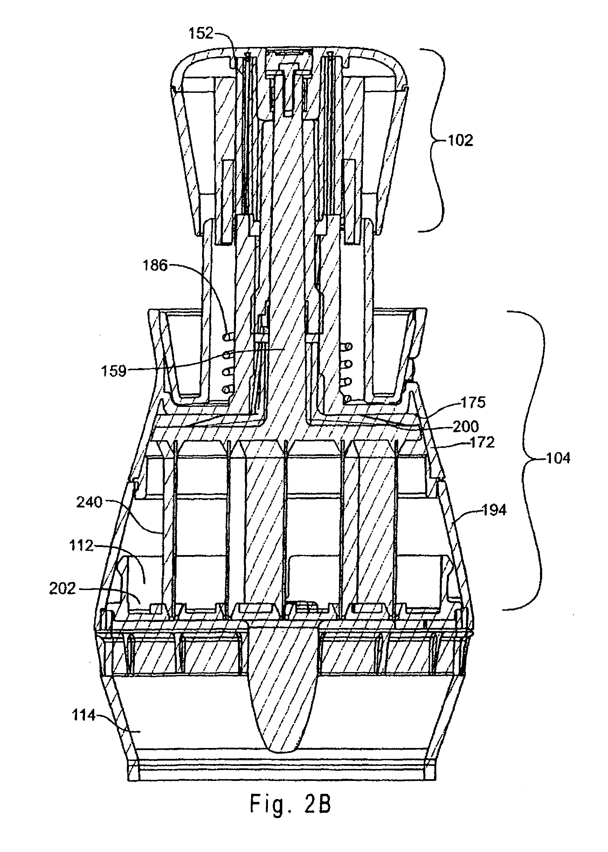

As depicted in FIG. 2B, the upper body part 172 is a part of the body part 104 of the food chopper 100 that also includes a mid-body part 194. The upper body part 172 also defines a bottom surface 175 that is configured to make contact with a blade shaft base 200 of the plunger 159 when the advancing tube 152, and the cap assembly 102, are biased upwardly by the main spring 186. The mid-body part 194 is a single substantially cylindrical shell. The mid-body part 194 is configured to removeably secure to the upper body part 172. Thus, the mid-body part 194 may be detached from the upper body part 172 to expose the food chopper 100. Preferably, the upper body part 172 and the mid-body part 194 are made of Acrylonitrile Butadiene Styrene (ABS). However, other materials known in the art may be used.

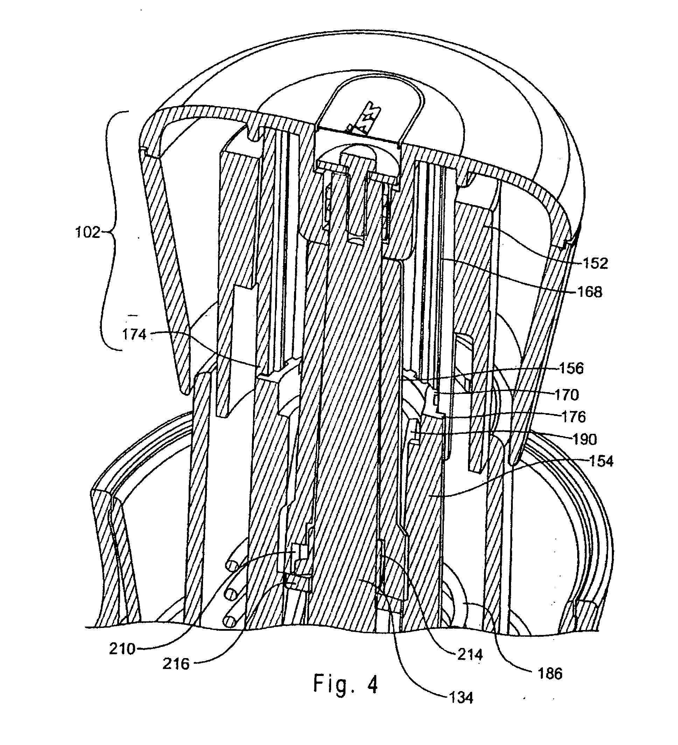

As depicted in FIGs. 3B and 4, the blade shaft advance spring 214 wraps around the blade shaft 134 and permits the blade shaft 134 to rotate in one angular direction only. The shuttle 156 operates to rotate the blade shaft 134 when the shuttle 156 is coupled with the blade shaft 134. Moreover, the shuttle 156 is configured to make contact with a shuttle retaining washer 216 at the distal end 212. The shuttle retaining washer 216 is designed to abut a shoulder 218 of the blade shaft base 200 and restricts the vertical movement of the shuttle 156 relative to the cap assembly 102. Preferably, the shuttle 156 is made of nylon or polyoxymethylene (POM). However, other materials known in the art may be used. Preferably, the shuttle retaining washer 216 is made of stainless steel. However, other materials known in the art may be used.

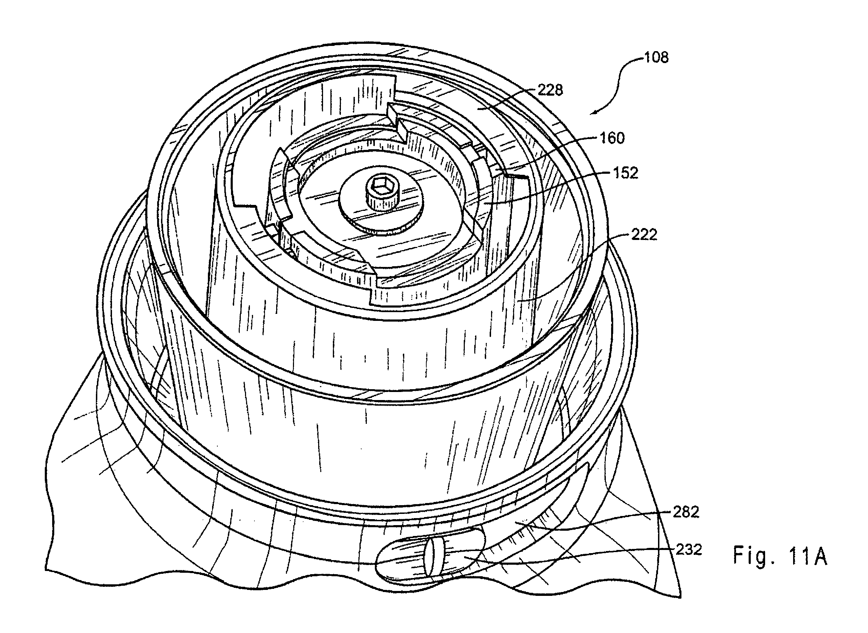

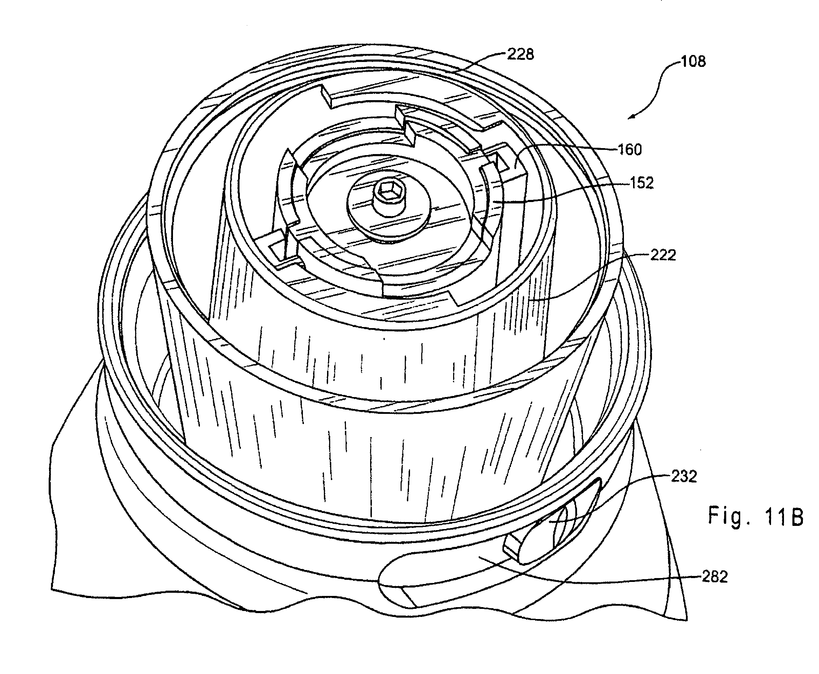

Referring to FIGs. 10, 11A and 11 B, the locking mechanism 108 of the food chopper 100 includes the locking ring 222, as depicted in FIG. 10, and the shoulders 160 of the advancing tube 152. The locking ring 222 includes an inner ring 224 and an outer ring 226 integrally connected and concentric to the inner ring 222. The inner ring 224 has a taller profile and includes two ledges 228 at the uppermost edge 230. The outer ring 226 of the locking ring 222 has a shorter profile and includes a locking switch 232 on the outer surface. It is noted that the inner ring 224 is configured to align between the cap side collar 118 and the advancing tube 152, as depicted in FIG. 2A.

As depicted in FIG. 11A , the ledges 228 are capable of sliding over and covering the shoulders 160 of the advancing tube 152 when the cap assembly 102 (not shown) is pressed down and to lock down the food chopper 100. When the shoulders 160 are covered and blocked by the ledges 228 of the locking ring 222, the advancing tube 152 and, thus, the cap assembly 102 are prevented from moving upward. Therefore, the food chopper 100 is in the closed or compressed configuration of FIG. 3A. In an open or extended configuration, as depicted in FIG. 11 B, the ledges 228 are not covering or blocking the advancing tube shoulders 160. Consequently, the advancing tube 152 and, thus, the cap assembly 102 may be pushed up by the main spring 186. In the extended configuration, the food chopper 100 is ready for use.

The locking switch 232 is configured to fit slidably within an extended, elongated window opening 238 on the upper body part 172. Therefore, the locking ring 222 is configured to rotate relative to the upper body part 172 and enables the locking switch 232 to turn between an open or closed position. Turning the locking switch 232 to the closed position has the effect of sliding the ledges 228 over to cover and block the shoulders 160 of the advancing tube 152 from moving upward when the cap assembly 102 is pressed down. This enables the cap assembly 102 to be locked down. Turning the locking switch 232 to the open position has the effect of sliding the ledges 228 away to uncover and unblock the shoulders 160 when the cap assembly 102 is locked down. This enables the main springs 186 to push the cap assembly 102 upward and returning the food chopper 100 to the extended configuration. Preferably, the locking ring 222 is made of Acrylonitrile Butadiene Styrene (ABS). However, other materials known in the art may be used.

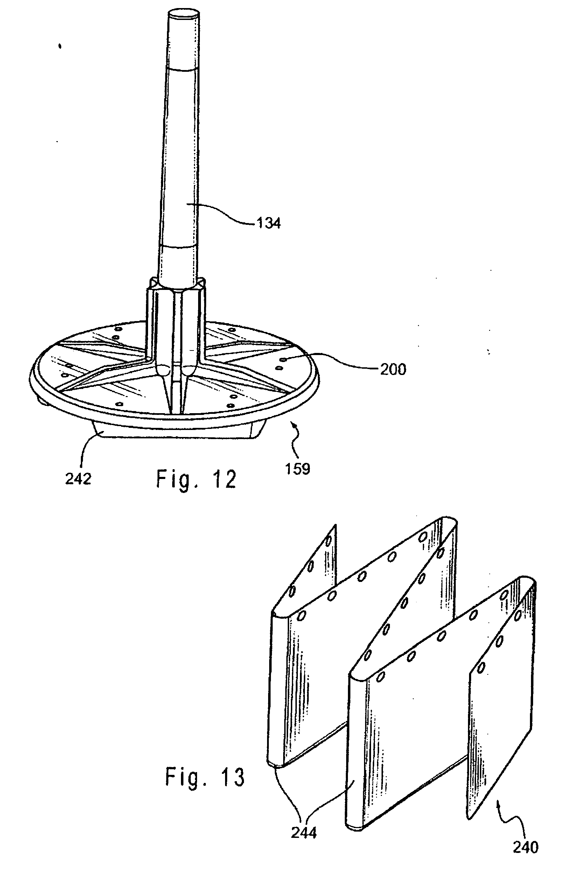

As depicted in FIGs. 2A, 12 and 13, the chopping device 110 of the food chopper 100 includes a plunger 159 and a symmetrical blade 240 integrally attached to the plunger 159. The plunger 159 includes the generally cylindrical blade shaft 134 and the generally disc-like blade shaft base 200 integrally attached to the blade shaft 134. The blade shaft base 200 provides a platform 242 where the symmetrical blade 240 may be attached. The term "symmetrical" as used herein means a blade shape that is identical when rotated 180°. In other words, the blade 240 is symmetrical in cross section along a line bisecting the length of the blade 240. The symmetrical blade 240 preferably has a wave shape, although other symmetrical shape may be used. The symmetrical blade 240 also includes smooth corners 244 between each blade segment for increased safety during use and cleaning. Preferably, the plunger 159 is made of Acrylonitrile Butadiene Styrene (ABS). However, other materials may be used. Preferably, the symmetrical blade 240 is made of stainless steel.

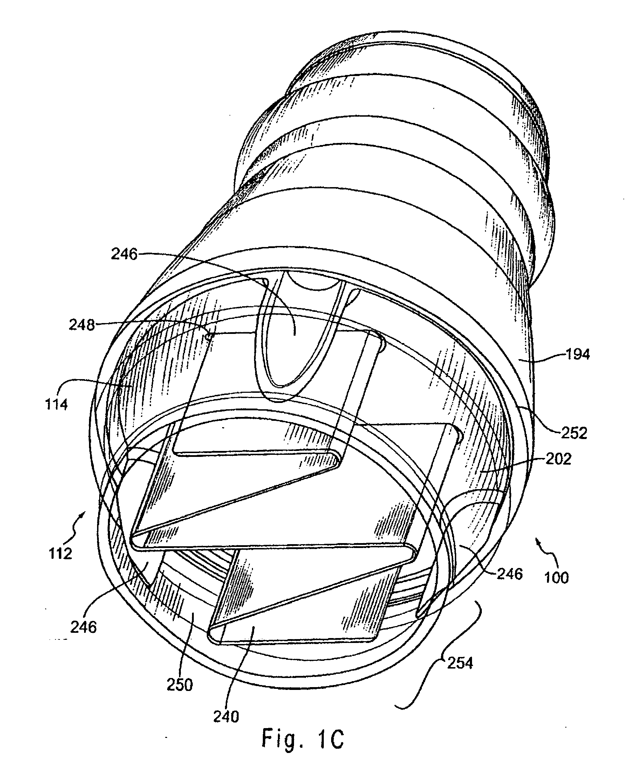

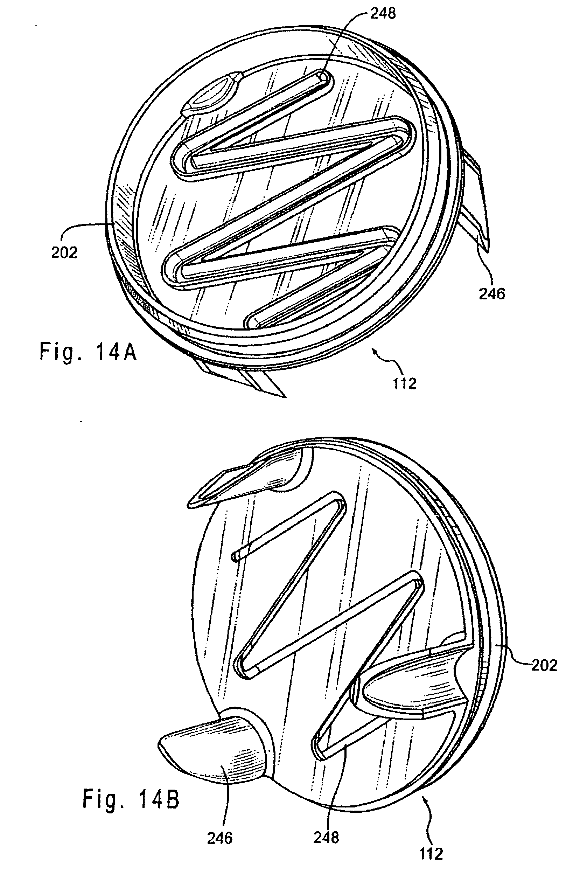

The food chopper 100 also includes the blade guard system 112, as depicted in FIGs. 1C and 14A and 14B. The blade guard system 112 includes the blade guard member 202 and at least one blade guard wiper 246 integrally attached to the blade guard member 202. The blade guard member 202 is generally a circular disc having a symmetrical slit opening 248 that corresponds to the shape of the symmetrical blade 240 and allows the symmetrical blade 240 to pass closely through. The symmetrical slit opening 248 allows the user to conveniently insert the blade guard member 202 onto the symmetrical blade 240 from at least two positions. The blade guard member 202 is designed to restrict the maximum extension whereby the symmetrical blade 240 may enter into the cup 114. The maximum extension is reached when the cap assembly 102 is pressed down and the blade shaft base 200 makes contact with the blade guard member 202. The blade guard member 202 is also designed to prevent food items from migrating upwardly beyond the cup 114 and into the chopper body part 104 during chopping by operating as a ceiling along the mid-body lowermost edge 252.

Referring to FIG. 1C, the blade guard wiper 246 is configured to be positioned adjacent the inner surface 250 of the cup 114 and to rotate when the symmetrical blade 240 rotates. Therefore, the blade guard wiper 246 may be used to scrape the inner surface 250 of the cup 114 and to remove or relocate any food item that may be stuck to the inner surface 250 during chopping. Preferably, the blade guard system 112 includes three equally-spaced blade guard wipers 246, although other numbers may be used. The preferred blade guard system 112 having three equally-spaced blade guard wipers 246 allows the blade guard wipers 246 to stand on its own. Preferably, the blade guard system 112 is made of polyethylene or polypropylene. However, other materials may be used.

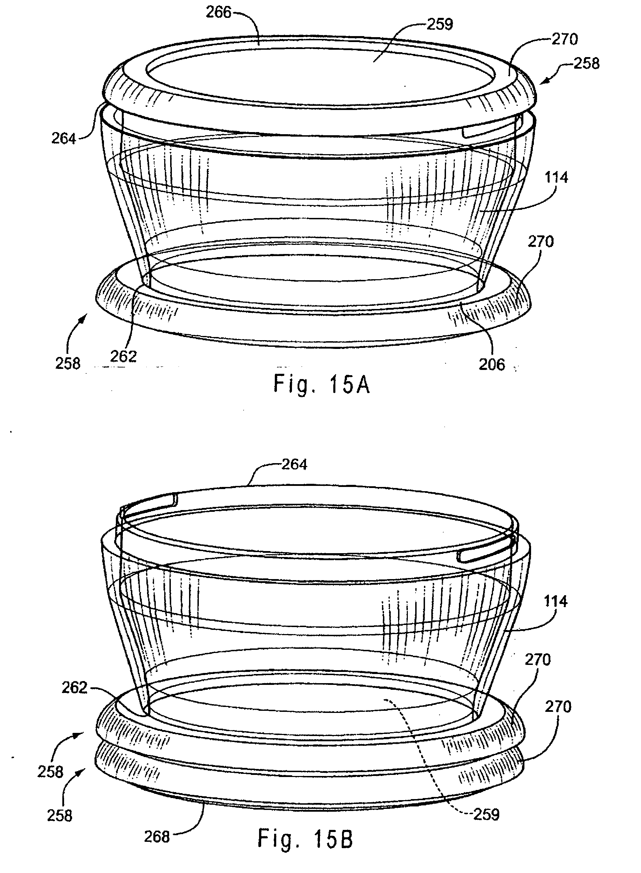

The food chopper 100 also includes a cup 114, as depicted in FIGs. 1C, 15A and 15B. The cup 114 is removeably secured to the lowermost edge 252 of the mid-body part 194 and defines a cup chamber 254 wherein food items may be kept and chopped. The cup 114 also houses the symmetrical blade 240 when the cap assembly 102 is pressed down. The cup 114 may be removed from the food chopper 100 and serves as a food container. Preferably, the cup 114 is made of from polypropylene. However, other materials known in the art may be used.

As depicted in FIGs. 15A and 15B, the cup 114 may optionally contain at least one cup pad 258. Through the use of the cup pad 258, the chopper 100 increases cutting effectiveness while at the same time providing shock-absorption, increasing comfort, and reducing noise. The cup pad 258 is described in provisional application 60/554,047 (filed on March 16, 2004). The cup pad 258 includes a generally soft surface 259 and an engaging member 270 integrally attached to the surface 259 around the circumference and defining annular rims 266 and 268. The cup pad 258 defines a first annular rim 266 on the first side of the cup pad 258 configured to engage with the edge 262 of the cup 114. The cup pad 258 also defines a second annular rim 268 on the second side of the cup pad 258 configured to engage with the edge 264 of the cup 114. As a result, the cup pad 258 may engage with the cup 114 on two sides. When the cup pad 258 engages with the edge 262 of the cup 114, the cup surface 259 may serve as a small chopping board for the food chopper 100. Alternatively, or concurrently, when the cup pad 258 engages with the edge 264 of the cup 114, the cup surface 259 may serve as a cover. The cup pads 258 may also be stacked on other cup pads 258.

When the symmetrical blade 240 is brought down upon a food item resting on the cup pad 258, the cup pad 258 deforms elastically and locally in response to the blade 240 movement, increasing the effective travel of the blade 240, and assisting the cutting of the food item. The soft, resilient surface 259 of the cup pad 258 allows the blade 240 to cut entirely through the food item. For example, this is particularly useful with food items such as tomatoes and the like because the cup pad surface 259 may deform such that the blade 240 cuts through the skin of the food item. When the blade 240 moves back up, the cup pad 248 recovers and returns to its original shape.

The cup pad 258 may have a variety of thickness, depending upon its intended use. In one example, the cup pad 258 has a uniform thickness between 1/8" and ½", preferably about ¼". In another example, the cup pad 258 may vary in thickness and/or may have a pattern provided in its surface 259.

The cup pad 258 comprises multiple layers having different hardness. In one example, the cup pad 258 includes a relatively soft side and a relatively hard side, and can be turned over depending upon the application. The cup pad 258 is made, generally, from thermoplastic elastomer. In one example, the cup pad 258 is made from GLS Versaflex®. The cup pad 258 is also washable under the tap water or in a dishwashing machine.

From a starting position, as depicted in FIG. 2B, when a user pushes the cap assembly 102, the advancing tube 152 that is rigidly attached to the cap top member 116 also slides vertically down towards the cup 114 by running along the protrusions 170 of the outer surface 171 of the body tube 154. This compresses the main spring 186. Meanwhile, the cap tube 126 of the cap assembly 102 pushes the shuttle 156 down towards the cup 114 by forcing the shuttle 156 to rotate and run downwardly along the helically formed grooves 190 on the inner surface 188 of the body tube 154. Moreover, as the shuttle 156 rotates and slides downward, it pushes the blade shaft base shoulder 218 of the plunger 159 and subsequently the symmetrical blade 240 down towards the bottom 256 of the cup 114. The plunger 159 and the symmetrical blade 240 are not rotated during the downward motion because the blade shaft 134 is not coupled with the shuttle 156 in this movement. The blade shaft advance springs 142 and 214 prevent the blade shaft 134 from rotating in the same direction in which the shuttle 156 is turning in the grooves 190.

This overall downward motion enables the symmetrical blade 240 to pass through the blade guard member 202 and into the cup 114, whereby food items may be chopped therein. When the symmetrical blade 240 reaches the bottom 256 of the cup 114, this represents the lowest position whereby the cap assembly 102 may be pushed down and the maximum extension whereby the symmetrical blade 240 may enter the cap 114. The food chopper 100 is now a down or closed position, as depicted in FIG. 2A.

A user may then discontinue pushing down or release the cap assembly 102 when the cap assembly 102 reaches the bottom 256 of the cup 114. Once pushing is discontinued, the remaining force, which is exerted by the main spring 186, pushes the advancing tube 152 and, thus, the cap assembly 102 up and away from the cup 114. The advancing tube 152 is pushed up by again running along the protrusions 170 of the outer surface 171 of the body tube 154. Simultaneously, the shoulder 136 of the cap tube 126 lifts the blade shaft washer 138 and subsequently the plunger 159 up and away from the bottom 252 of the cup 114. The base shaft base shoulder 218 of the plunger 159 then lifts the shuttle 156 up by forcing it to again rotate and run along the helically formed grooves 190 of the inner surface 188 of the body tube 154. The shuttle 156 is coupled with the blade shaft 134 on the way up and rotates the plunger 159 and the symmetrical blade 240 for an incremental distance. The symmetrical blade 240 is rotated as the shaft advance wrap spring 214 in the shuttle 156 causes the blade shaft 134 to rotate in the same direction in which the shuttle 156 is turning in the grooves 190. The shaft advance wrap spring 142 in the cap tube chamber 130 also permits the blade shaft 134 to turn independently of the cap tube 126 of the cap assembly 102. Consequently, the cap assembly 102 is not rotated when the cap assembly 102 is released, which provides more comfort to the user operating the food chopper 100.

Additionally, when the symmetrical blade 210 is turned, it couples with the symmetrical slit opening 248 of the blade guard member 202 and forces the blade guard wipers 246 that are attached to the blade guard member 202 to turn together. As a result, the turning blade guard wipers 246 have the effect of wiping and scraping away any food items that may be stuck to the inner surface 250 of the cup 114.

Since the symmetrical blade 240 is rotated an increment on the way towards the fully up position, the symmetrical blade 240 may chop the food items at a different angle the next time the cap assembly 102 is pushed down. Preferably, the symmetrical blade 240 is turned about 30°, although other amount may be used. As mentioned previously, when the base shaft base 200 reaches the bottom surface 175 of the upper body part 172, this represents the maximum position whereby the cap assembly 102 may be pushed up, as depicted in FIG. 2B. The food chopper 100 is now in an open or extended position and is ready for the next downward motion. The user may repeat pushing and releasing the cap assembly 102 to obtain chopped foodstuff with a desired grade of fineness.

When the cap assembly 102 is pressed down, as depicted in FIG. 2A, the food chopper 100 is in a compressed or closed configuration. In this compressed configuration, the user may use the locking mechanism 108 to lock down the cap assembly 102 and therefore enable the food chopper 100 to be conveniently stored away while occupying less space. A user may accomplish this by turning the locking switch 232 of the locking ring 222 from the open position to the closed position when the cap assembly 102 is pressed down. When the locking switch 232 is turned, the ledges 228 of the inner ring 224 are also turned, as depicted in FIG. 11A. When the locking switch 232 reaches the closed position, the ledges 228 are positioned over the shoulders 160 of the advancing tube 152. The ledges 228 block the vertical advancement of the advancing tube 152 and thus prevent the main spring 186 from pushing the advancing tube 152 and the cap assembly 102 upward. It is noted that the food chopper 100 would be in this compressed position for as long as the locking switch 232 is in the closed position and the ledges 228 are positioned over the shoulders 160 of the advancing tube 152.

To return the food chopper 100 to the extended or open position, the user may turn the locking switch 232 back to the open position from the closed position. When the locking switch 232 is turned, the ledges 228 of the inner ring 224 are also turned, as depicted in FIG. 11 B. When the locking switch 232 reaches the open position, the ledges 228 would be positioned away from the shoulders 160 of the advancing tube 152. Therefore, the ledges 228 are not blocking the vertical advancement of the advancing tube 152, thus enabling the main spring 186 to push the advancing tube 152. The cap assembly 102 can therefore move upwardly and back to the extended position.

Moreover, the closed or compressed configuration of the food chopper 100 allows the user to expose the symmetrical blade 240 for easy cleaning, as depicted in FIG. 1C. For example, a user may place the exposed symmetrical blade 240 under a tap of running water. A user may also first detach the cup 114 from the mid-body part 194 to expose the symmetrical blade 240 for cleaning. Optionally, a user may also remove the mid-body part 194 from the upper body part 172 to further expose the symmetrical blade 240 for cleaning.

While the preferred embodiments of the invention have been described, it should be understood that the invention is not so limited and modifications may be made without departing from the invention. The scope of the invention is defined by the appended claims, and all devices that come within the meaning of the claims, either literally or by equivalence, are intended to be embraced therein.

## Claims

1. A food chopper (100), comprising:
a body part (204) having a body tube (154);
a cap assembly (102) slidably attached to a first side of the body tube (154) for sliding movement with respect to the body part (204);
a shuttle (156) slidably attached to a second side of the body tube (154) for helical sliding movement with respect to the body part (104);
a plunger (159) rotably attached to the cap assembly (102) and the shuttle (156) for sliding movement with respect to the body part (104) and rotational movement with respect to the cap assembly (102) and the body part (104); and
a blade attached (240) to the plunger (159),
wherein pushing the cap assembly (102) down enables the blade (240) to slide down with respect to the body part (104), and wherein releasing the cap assembly (102) enables the blade (240) to slide up with respect to the body part (104) and allows the blade (240) to rotate with respect to the body part (104) and the cap assembly (102).

2. The food chopper of claim 1, wherein the cap assembly (102) comprises a cap top member (116) and a cap side collar (118) attached to the cap top member.

3. The food chopper of claim 2, wherein the cap top member (116) further comprises a cap tube (126), the cap tube comprising a slot to house a first blade shaft advance wrap spring configured to permit the plunger (159) to rotate in one angular direction only.

4. The food chopper of claim 3, wherein the shuttle (156) further comprises a slot at distal end configured to house a second blade shaft advance wrap spring to permit the plunger (159) to rotate in the same angular direction as the first blade shaft advance wrap spring.

5. The food chopper of claim 3, wherein the cap tube (126) further comprises a cap tube opening for rotatable reception of the plunger (159).

6. The food chopper of claim 3, wherein the cap tube (126) further comprises an internal shoulder (136) to abut a blade shaft washer (138).

7. The food chopper of claim 6, wherein the blade shaft washer (138) is secured to the plunger by a blade shaft screw (146).

8. The food chopper of claim 2, wherein the cap assembly (102) further comprises an advancing tube (152) attached to the cap top member (116).

9. The food chopper of claim 8, wherein the advancing tube (152) comprises at least one shoulder (160) near a proximal end of the advancing tube (152).

10. The food chopper of claim 8, wherein the advancing tube (152) further comprises a pair of arms (178) defining an area for housing a main spring (186), the main spring configured to wrap around the first side of the body tube (154) and bias against the cap assembly (102).

11. The food chopper of claim 8, wherein the advancing tube (152) further comprises a plurality of slots configured to engage with a plurality of protrusions on the first side of the body tube (154) and to enable the advancing tube (152) to slide with respect to the body tube (154).

12. The food chopper of claim 1, wherein the body tube (154) further comprises a plurality of helically formed grooves (190) on the second side of the body tube configured to engage with a plurality of helically formed protrusions (204) of the shuttle (156) to enable the shuttle to slide helically with respect to the body tube (154).

13. The food chopper of claim 1, wherein the shuttle (156) defines an opening sized to sliably receive the plunger (159).

14. The food chopper of claim 1, wherein the shuttle (156) further comprises a slot (210) at distal end 212 configured to house a blade shaft advance wrap spring (214) configured to permit the plunger (159) to rotate in one angular direction only.

15. The food chopper of claim 1, wherein the body part (104) comprising an upper body part (172) and a mid-body party (194) removeably attached to the upper body part.

16. The food chopper of claim 1, wherein the food chopper further comprises a locking ring (222) rotably attached to a proximal end of the body part for rotational movement with respect to the body part (172), the locking ring (222) having an inner ring (224) and an outer ring integrally attached to the inner ring.

17. The food chopper of claim 16, wherein the inner ring (224) comprises a ledge (228) configured to rotate and cover a shoulder (160) near a proximal end of an advancing tube (152) of the cap assembly (102).

18. The food chopper of claim 16, wherein the outer ring comprises a locking switch (232) configured to rotate between a first position and a second position within a window opening (238) of the body part (172).

19. The food chopper of claim 1, wherein the plunger (159) comprises a blade shaft (134) and a blade shaft base (200).

20. The food chopper of claim 19, wherein the blade shaft base (200) comprises a blade shaft base shoulder (218) configured to abut a shuttle (156) retaining washer.

21. The food chopper of claim 19, wherein the blade shaft base (200) further comprises a platform (242) configured to attach the blade (240).

22. The food chopper of claim 1, wherein the blade (240) is symmetrical in cross section along a line bisecting the length of the blade.

23. The food chopper of claim 1, wherein the blade (240) has smooth corners.

24. The food chopper of claim 1, further comprising a blade guide system having a blade guide comprising a slot corresponding to the cross-sectional shape of the blade (240).

25. The food chopper of claim 24, further comprising a blade guide wiper (246), the blade guide wiper defines a curvature configured to remove or relocate food items.

26. The food chopper of claim 1, further comprising a cup (114) removably attached to a distal (212) end the body part (104) .

27. The food chopper of claim 26, further comprising a cup pad (258) removably engaging the cup (114).

28. The food chopper of claim 27, wherein the cup pad (258) comprises a surface (259) and an engaging member (270) attached to the surface.

29. The food chopper of claim 27, wherein the cup pad (258) defines a first annular rim (266) configured to removably engage a first edge (262) of the cup (114).

30. The food chopper of claim 29, wherein the cup pad (258) defines a second annular rim (268) configured to removably engage a second edge (264) of the cup (114).

31. The food chopper of claim 27, wherein the cup pad (258) has a thickness from about 0.125 inches to about 0.5 inches.

32. The food chopper of claim 27, wherein the cup pad (258) comprises a generally soft surface.

33. The food chopper of claim 28, wherein the surface is shock-absorbable.

34. The food chopper of claim 28, wherein the surface is deformable.

35. The food chopper of claim 28, wherein the surface is recoverable.

36. The food chopper of claim 27, wherein the cup pad (258) is washable.

37. A method of using a food chopper (100), comprising:
pushing down on a cap assembly (102) of the food chopper (100); the food chopper comprising:
a body part (104) having a body tube (154);
the cap assembly (102) slidably attached to a first side of the body tube (154) for sliding movement with respect to the body part (104);
a shuttle (156) slidably attached to a second side of the body tube (154) for helical sliding movement with respect to the body part (104);
a plunger (159) rotably attached to the cap assembly (102) and the shuttle (156) for sliding movement with respect to the body part and rotational movement with respect to the cap assembly and the body part; and
a blade (240) attached to the plunger (159); and
releasing the cap assembly (102);
wherein pushing the cap assembly (102) down enables the blade (240) to slide down with respect to the body part (104), and wherein releasing the cap assembly (102) enables the blade to slide up with respect to the body part and allows the blade to rotate with respect to the body part and the cap assembly.

38. A method of locking down a food chopper (100), comprising:
pushing down on a cap assembly (102) of the food chopper, the food chopping comprising:
a body part (104) having a body tube (154);
the cap assembly (102) slidably attached to a first side of the body tube (154) for sliding movement with respect to the body part, the cap assembly rotably mounted to a plunger (159);
a blade (240) attached to the plunger (159); and
a locking ring (222) rotatably attached to a proximal end of the body part (104) for rotational movement with respect to the body part, the locking ring having a locking switch (232) configured to rotate between an open position and a closed position within a window opening of the body part (104);
rotating the locking switch (232) from the open position to the closed position,
wherein rotating the locking switch (232) from the open position to the closed position prevents the cap assembly (102) from sliding up with respect to the body part (104) upon release of the cap assembly (102).

39. A method of unlocking a food chopper (100), comprising:
rotating a locking switch (232) of the food chopper from a closed position to an open position, the food chopping comprising:
a body part (104) having a body tube (154);
a cap assembly (102) slidably attached to a first side of the body tube (154) for sliding movement with respect to the body part, the cap assembly rotably mounted to a plunger (159);
a blade (240) attached to the plunger (159); and
a locking ring (222) rotatably attached to a proximal end of the body part (104) for rotational movement with respect to the body part, the locking ring having the locking switch (232) configured to rotate between the open position and the closed position within a window opening of the body part (104),
wherein rotating the locking switch (232) from the closed position to the open position enables the cap assembly (102) to slide up with respect to the body part (104).

## Patentansprüche

1. Ein Hacker (100) für Lebensmittel, der Folgendes aufweist:
einen Gehäusekörper (104), der ein Gehäuserohr (154) besitzt;
einen Haubenaufbau (102), der gleitend an einer ersten Seite des Gehäuserohrs (154) zur gleitenden Bewegung im Verhältnis zum Gehäusekörper (104) befestigt ist;
ein Gleitstück (156), das gleitend an einer zweiten Seite des Gehäuserohrs (154) zur spiralförmig gleitenden Bewegung im Verhältnis zum Gehäusekörper (104) befestigt ist;
einen drehbar am Haubenaufbau (102) und am Gleitstück (156) befestigten Stößel (159) zur gleitenden Bewegung im Verhältnis zum Gehäusekörper (104) und zur drehenden Bewegung im Verhältnis zum Haubenaufbau (102) und zum Gehäusekörper (104); und
eine Klinge (240), die am Stößel (159) befestigt ist,
wobei das Niederdrücken des Haubenaufbaus (102) es der Klinge (240) ermöglicht, im Verhältnis zum Gehäusekörper (104) nach unten zu gleiten; und wobei das Loslassen des Haubenaufbaus (102) es der Klinge ermöglicht, im Verhältnis zum Gehäusekörper (104) nach oben zu gleiten und es der Klinge gestattet, im Verhältnis zum Gehäusekörper und zum Haubenaufbau zu drehen.

2. Hacker für Lebensmittel nach Anspruch 1, wobei der Haubenaufbau (102) ein Haubenoberteil (116) und einen am Haubenoberteil befestigten Haubenseitenkragen (118) aufweist.

3. Hacker für Lebensmittel nach Anspruch 2, bei dem das Haubenoberteil (116) außerdem ein Haubenrohr (126) aufweist und das Haubenrohr eine Aussparung zur Aufnahme einer ersten Schlingfeder für den Klingenschaftvorschub aufweist, die dazu ausgebildet ist, es dem Stößel (159) zu gestatten, nur in eine Winkelrichtung zu drehen.

4. Hacker für Lebensmittel nach Anspruch 3, bei dem das Gleitstück (156) außerdem an seinem distalen Ende eine Aussparung aufweist, die dazu ausgebildet ist, eine zweite Schlingfeder für den Klingenschaftvorschub aufzunehmen, um es so dem Stößel (159) zu gestatten, in dieselbe Winkelrichtung zu drehen, wie die erste Schlingfeder für den Klingenschaftvorschub.

5. Hacker für Lebensmittel nach Anspruch 3, bei dem das Haubenrohr (126) außerdem eine Haubenrohröffnung zur drehenden Aufnahme des Stößels (159) aufweist.

6. Hacker für Lebensmittel nach Anspruch 3, bei dem das Haubenrohr (126) außerdem eine Innenschulter (136) zum Anstoßen einer Klingenschaftscheibe (138) aufweist.

7. Hacker für Lebensmittel nach Anspruch 6, bei dem die Klingenschaftscheibe (138) mittels einer Klingenschaftschraube (146) am Stößel gesichert ist.

8. Hacker für Lebensmittel nach Anspruch 2, bei dem der Haubenaufbau (102) außerdem ein an dem Haubenoberteil (116) befestigtes Vorschubrohr (152) aufweist.

9. Hacker für Lebensmittel nach Anspruch 8, bei dem das Vorschubrohr (152) mindestens eine Schulter (160) in Nähe eines proximalen Endes des Vorschubrohrs (152) aufweist.

10. Hacker für Lebensmittel nach Anspruch 8, bei dem das Vorschubrohr (152) außerdem ein Armpaar (178) aufweist, das einen Bereich zur Aufnahme der Hauptfeder (186) bildet, und die Hauptfeder dazu ausgebildet ist, sich um die erste Seite des Gehäuserohrs (154) zu winden und eine Vorspannung gegen den Haubenaufbau (102) auszuüben.

11. Hacker für Lebensmittel nach Anspruch 8, bei dem das Vorschubrohr (152) außerdem eine Mehrzahl von Aussparungen aufweist, die dazu ausgebildet sind, mit einer Mehrzahl von Vorsprüngen an der ersten Seite des Gehäuserohrs (154) in Eingriff zu stehen, um so dem Vorschubrohr (152) das Gleiten im Verhältnis zum Gehäuserohr (154) zu ermöglichen.

12. Hacker für Lebensmittel nach Anspruch 1, bei dem das Gehäuserohr (154) außerdem eine Mehrzahl von spiralförmig ausgebildeten Rillen (190) an der zweiten Seite des Gehäuserohrs aufweist, die dazu ausgebildet sind, in eine Mehrzahl von spiralförmig ausgebildeten Vorsprüngen (204) des Gleitstücks (156) einzugreifen, um so dem Gleitstück das spiralförmige Gleiten im Verhältnis zum Gehäuserohr (154) zu ermöglichen.

13. Hacker für Lebensmittel nach Anspruch 1, bei dem das Gleitstück (156) eine Öffnung bildet, die für die gleitende Aufnahme des Stößels (159) bemessen ist.

14. Hacker für Lebensmittel nach Anspruch 1, bei dem das Gleitstück (156) außerdem an seinem distalen Ende (212) eine Aussparung (210) aufweist, die dazu ausgebildet ist, eine Schlingfeder (214) für den Klingenschaftvorschub aufzunehmen, die dazu ausgebildet ist, es dem Stößel (159) zu gestatten, nur in eine Winkelrichtung zu drehen.

15. Hacker für Lebensmittel nach Anspruch 1, bei dem der Gehäusekörper (104) einen oberen Gehäusekörper (172) und einen lösbar am oberen Gehäusekörper befestigten, mittleren Gehäusekörper (194) aufweist.

16. Hacker für Lebensmittel nach Anspruch 1, bei dem der Hacker für Lebensmittel außerdem einen am proximalen Ende des Gehäusekörpers drehbar befestigten Verriegelungsring (222) zur drehenden Bewegung im Verhältnis zum Gehäusekörper (172) aufweist, wobei der Verriegelungsring (222) einen Innenring (224) und einen vollständig am Innenring befestigten Außenring besitzt.

17. Hacker für Lebensmittel nach Anspruch 16, bei dem der Innenring (224) eine Auskragung (228) aufweist, die dazu ausgebildet ist, sich zu drehen und eine Schulter (160) in Nähe des proximalen Endes eines Vorschubrohrs (152) des Haubenaufbaus (102) abzudecken.

18. Hacker für Lebensmittel nach Anspruch 16, bei dem der Außenring einen Verriegelungsschalter (232) aufweist, der dazu ausgebildet ist, zwischen einer ersten Position und einer zweiten Position innerhalb eines Fensters (238) des Gehäusekörpers (172) zu drehen.

19. Hacker für Lebensmittel nach Anspruch 1, bei dem der Stößel (159) einen Klingenschaft (134) und einen Klingenschaftfuß (200) aufweist.

20. Hacker für Lebensmittel nach Anspruch 19, bei dem der Klingenschaftfuß (200) eine Klingenschaftfußschulter (218) aufweist, die dazu ausgebildet ist, an eine Haltescheibe des Gleitstücks (156) anzustoßen.

21. Hacker für Lebensmittel nach Anspruch 19, bei dem der Klingenschaftfuß (200) außerdem eine Fläche (242) aufweist, die dazu ausgebildet ist, die Klinge (240) zu befestigen,

22. Hacker für Lebensmittel nach Anspruch 1, bei dem die Klinge (240) im Querschnitt zu einer Winkelhalbierenden in Längsrichtung der Klinge symmetrisch ist.

23. Hacker für Lebensmittel nach Anspruch 1, bei dem die Klinge (240) runde Ecken hat.

24. Hacker für Lebensmittel nach Anspruch 1, der außerdem ein Klingenführungssystem aufweist, das eine Klingenführung besitzt, die einen zur Querschnittsform der Klinge (240) entsprechenden Schlitz aufweist.

25. Hacker für Lebensmittel nach Anspruch 24, der außerdem einen Klingenführungsabstreifer (246) aufweist, wobei der Klingenführungsabstreifer eine Krümmung beschreibt, die dazu ausgebildet ist, Lebensmittelteile zu entfernen oder zu verschieben.

26. Hacker für Lebensmittel nach Anspruch 1, der außerdem eine lösbar an einem distalen Ende (212) des Gehäusekörpers (104) befestigte Schale (114) aufweist.

27. Hacker für Lebensmittel nach Anspruch 26, der außerdem eine abnehmbar auf die Schale (114) aufgesteckte Schalenauflage (258) aufweist.

28. Hacker für Lebensmittel nach Anspruch 27, bei dem die Schalenauflage (258) eine Fläche (259) und ein an der Fläche befestigtes Steckteil (270) aufweist.

29. Hacker für Lebensmittel nach Anspruch 27, bei dem die Schalenauflage (258) einen ersten ringförmigen Rand (266) bildet, der dazu ausgebildet ist, abnehmbar auf einen ersten Rand (262) der Schale (114) aufgesteckt zu werden.

30. Hacker für Lebensmittel nach Anspruch 29, bei dem die Schalenauflage (258) einen zweiten ringförmigen Rand (268) bildet, der dazu ausgebildet ist, abnehmbar auf einen zweiten Rand (264) der Schale (114) aufgesteckt zu werden.

31. Hacker für Lebensmittel nach Anspruch 27, bei dem die Schalenauflage (258) zwischen 0,125 Zoll und 0,5 Zoll dick ist.

32. Hacker für Lebensmittel nach Anspruch 27, bei dem die Schalenauflage (258) eine allgemein glatte Fläche aufweist.

33. Hacker für Lebensmittel nach Anspruch 28, bei dem die Fläche stoßdämpfend ist.

34. Hacker für Lebensmittel nach Anspruch 28, bei dem die Fläche verformbar ist.

35. Hacker für Lebensmittel nach Anspruch 28, bei dem die Fläche abdeckbar ist.

36. Hacker für Lebensmittel nach Anspruch 27, bei dem die Schalenauflage (258) abwaschbar ist.

37. Verfahren zur Verwendung eines Hackers für Lebensmittel (100), das Folgendes umfasst:
das Niederdrücken eines Haubenaufbaus (102) des Hackers für Lebensmittel (100), wobei der Hacker für Lebensmittel Folgendes aufweist:
einen Gehäusekörper (104), der ein Gehäuserohr (154) besitzt;
einen Haubenaufbau (102), der gleitend an einer ersten Seite des Gehäuserohrs (154) zur gleitenden Bewegung im Verhältnis zum Gehäusekörper (104) befestigt ist;
ein Gleitstück (156), das gleitend an einer zweiten Seite des Gehäuserohrs (154) zur spiralförmig gleitenden Bewegung im Verhältnis zum Gehäusekörper (104) befestigt ist;
einen drehbar am Haubenaufbau (102) und am Gleitstück (156) befestigten Stößel (159) zur gleitenden Bewegung im Verhältnis zum Gehäusekörper und zur drehenden Bewegung im Verhältnis zum Haubenaufbau und zum Gehäusekörper; und
eine am Stößel (159) befestigte Klinge (240); und
das Loslassen des Haubenaufbaus (102);
wobei das Niederdrücken des Haubenaufbaus (102) es der Klinge (240) ermöglicht, im Verhältnis zum Gehäusekörper (104) nach unten zu gleiten; und wobei das Loslassen des Haubenaufbaus (102) es der Klinge ermöglicht, im Verhältnis zum Gehäusekörper (104) nach oben zu gleiten und es der Klinge gestattet, im Verhältnis zum Gehäusekörper und zum Haubenaufbau zu drehen.

38. Verfahren zur Verriegelung eines Hackers für Lebensmittel (100), das Folgendes umfasst:
das Niederdrücken des Haubenaufbaus (102) des Hackers für Lebensmittel, wobei der Hacker für Lebensmittel Folgendes aufweist:
einen Gehäusekörper (104), der ein Gehäuserohr (154) besitzt;
einen Haubenaufbau (102), der gleitend an einer ersten Seite des Gehäuserohrs (154) zur gleitenden Bewegung im Verhältnis zum Gehäusekörper befestigt ist, wobei der Haubenaufbau drehend an einem Stößel (159) montiert ist;
eine am Stößel (159) befestigte Klinge (240); und
einen am proximalen Ende des Gehäusekörpers (104) drehbar befestigten Verriegelungsring (222) zur drehenden Bewegung im Verhältnis zum Gehäusekörper, wobei der Verriegelungsring einen Verriegelungsschalter (232) aufweist, der dazu ausgebildet ist, zwischen einer geöffneten Position und einer geschlossenen Position innerhalb eines Fensters des Gehäusekörpers (104) zu drehen;
das Drehen des Verriegelungsschalters (232) von der geöffneten Position in die geschlossene Position,
wobei das Drehen des Verriegelungsschalters (232) von der geöffneten Position in die geschlossene Position den Haubenaufbau (102) daran hindert, beim Loslassen des Haubenaufbaus (102), im Verhältnis zum Gehäusekörper (104) nach oben zu gleiten.

39. Verfahren zur Entriegelung eines Hackers für Lebensmittel (100), das Folgendes umfasst:
das Drehen des Verriegelungsschalters (232) des Hackers für Lebensmittel von einer geschlossenen Position in eine geöffnete Position, wobei der Hacker für Lebensmittel Folgendes aufweist:
einen Gehäusekörper (104), der ein Gehäuserohr (154) besitzt;
einen Haubenaufbau (102), der gleitend an einer ersten Seite des Gehäuserohrs (154) zur gleitenden Bewegung im Verhältnis zum Gehäusekörper befestigt ist, wobei der Haubenaufbau drehend an einem Stößel (159) montiert ist;
eine am Stößel (159) befestigte Klinge (240); und
einen am proximalen Ende des Gehäusekörpers (104) drehbar befestigten Verriegelungsring (222) zur drehenden Bewegung im Verhältnis zum Gehäusekörper, wobei der Verriegelungsring einen Verriegelungsschalter (232) aufweist, der dazu ausgebildet ist, zwischen der geöffneten Position und der geschlossenen Position innerhalb eines Fensters des Gehäusekörpers (104) zu drehen;
wobei das Drehen des Verriegelungsschalters (232) von der geschlossenen Position in die geöffnete Position es dem Haubenaufbau (102) ermöglicht, im Verhältnis zum Gehäusekörper (104) nach oben zu gleiten.

## Revendications

1. Hachoir pour produit alimentaire (100), comprenant
une partie de corps (104) ayant un corps tubulaire (154);
un assemblage de couvercle (102) fixé en coulissement à une première face du corps tubulaire (154) pour le mouvement coulissant par rapport à la partie de corps (104);
un chariot (156) fixé coulissant à une seconde face du corps tubulaire (154) pour un mouvement coulissant hélicoïdal par rapport à la partie de corps (104),
un piston (159) fixé en rotation à l'assemblage de couvercle (102) et au chariot (156) pour le mouvement coulissant par rapport à la partie de corps (104) et pour le mouvement de rotation par rapport à l'assemblage de couvercle (102) et la partie de corps (104); et
une lame (240) fixée au piston (159);
dans lequel la poussée vers le bas de l'assemblage de couvercle (102) permet à la lame (240) de coulisser vers le bas par rapport à la partie de corps (104) et dans lequel la libération de l'assemblage de couvercle (102) permet à la lame (240) de coulisser vers le haut par rapport à la partie de corps (104) et permet à la lame (240) de tourner par rapport à la partie de corps (104) et à l'assemblage de couvercle (102).

2. Hachoir pour produit alimentaire de la revendication 1, dans lequel l'assemblage de couvercle (102) comprend un organe de couvercle supérieur (116) et un collier latéral de couvercle (118) fixé à l'organe supérieur de couvercle.

3. Hachoir pour produit alimentaire de la revendication 2, dans lequel l'organe supérieur de couvercle (116) comprend en outre un couvercle tubulaire (126), le couvercle tubulaire comprenant une fente pour loger un premier ressort enroulé d'avance de tige de lame configuré pour permettre au piston (159) de tourner dans une seule direction angulaire.

4. Hachoir pour produit alimentaire de la revendication 3, dans lequel le chariot (156) comprend en outre une fente à l'extrémité distale configurée pour loger un second ressort d'enveloppe d'avance de tige de lame pour permettre au piston (159) de tourner dans la même direction angulaire que le premier ressort enroulé d'avance de tige de lame.

5. Hachoir pour produit alimentaire de la revendication 3, dans lequel le couvercle tubulaire (126) comprend en outre une ouverture de couvercle tubulaire pour la réception en rotation du piston (159).

6. Hachoir pour produit alimentaire de la revendication 3, dans lequel le couvercle tubulaire (126) comprend en outre un épaulement interne (136) pour venir en butée avec une rondelle de tige de lame (138).

7. Hachoir pour produit alimentaire de la revendication 6, dans lequel la rondelle de tige de lame (138) est fixée au piston par une vis de tige de lame (146).

8. Hachoir pour produit alimentaire de la revendication 2, dans lequel l'assemblage de couvercle (102) comprend en outre un tube d'avance (152) attaché à l'organe supérieur de couvercle (116).

9. Hachoir pour produit alimentaire de la revendication 8, dans lequel le tube d'avance (152) comprend au moins un épaulement (160) proche d'une extrémité proximale du tube d'avance (152).

10. Hachoir pour produit alimentaire de la revendication 8, dans lequel le tube d'avance (152) comprend en outre une paire de bras (178) définissant une zone pour loger un ressort principal (186), le ressort principal étant défini pour envelopper la première face du corps tubulaire (154) et venir s'appliquer en biais contre l'assemblage de couvercle (102).

11. Hachoir pour produit alimentaire de la revendication 8, dans lequel le tube d'avance (152) comprend en outre une pluralité de fentes configurées pour s'engager avec une pluralité de saillies sur la première face du corps tubulaire (154) et permettre au tube d'avance (152) de coulisser par rapport au corps tubulaire (154).

12. Hachoir pour produit alimentaire de la revendication 1, dans lequel le corps tubulaire (154) comprend en outre une pluralité de rainures (190) de forme hélicoïdale sur la seconde face du corps tubulaire configurées pour s'engager avec une pluralité de saillies (204) de forme hélicoïdale du piston (156) afin de permettre au piston de coulisser de manière hélicoïdale par rapport au corps tubulaire (154).

13. Hachoir pour produit alimentaire de la revendication 1, dans lequel le chariot (156) définit une ouverture dimensionnée pour recevoir le piston (159) en coulissement.

14. Hachoir pour produit alimentaire de la revendication 1, dans lequel le chariot (156) comprend en outre une fente (210) à l'extrémité distale (212) configurée pour loger un ressort enroulé d'avance de tige de lame (214) configuré pour permettre au piston (159) de tourner dans une seule direction angulaire.

15. Hachoir pour produit alimentaire de la revendication 1, dans lequel la partie de corps (104) comprend une partie de corps supérieur (172) et une partie de corps médian (194) fixée de manière amovible à la partie de corps supérieur.

16. Hachoir pour produit alimentaire de la revendication 1, dans lequel le hachoir pour produit alimentaire comprend en outre une bague de verrouillage (222) fixée en rotation à une extrémité proximale de la partie de corps pour un mouvement rotationnel par rapport à la partie de corps (172), la bague de verrouillage (222) ayant une bague interne (224) et une bague externe fixée intégralement à la bague interne.

17. Hachoir pour produit alimentaire de la revendication 16, dans lequel la bague interne (224) comprend une pièce d'appui (228) configurée pour tourner et couvrir un épaulement (160) à proximité d'une extrémité proximale d'un tube d'avance (152) de l'assemblage de couvercle (102).

18. Hachoir pour produit alimentaire de la revendication 16, dans lequel la bague externe comprend un bouton de verrouillage (232) configuré pour tourner entre une première position et une seconde position à l'intérieur d'une ouverture de fenêtre (238) de la partie de corps (172).

19. Hachoir pour produit alimentaire de la revendication 1, dans lequel le piston (159) comprend une tige de lame (134) et une base de tige de lame (200).

20. Hachoir pour produit alimentaire de la revendication 10, dans lequel la base de tige de lame (200) comprend un épaulement de base de tige de lame (218) configuré pour venir en butée contre la rondelle de retenue de piston (156).

21. Hachoir pour produit alimentaire de la revendication 19, dans lequel la base de tige de lame (200) comprend en outre une plateforme (242) configurée pour fixer la lame (240).

22. Hachoir pour produit alimentaire de la revendication 1, dans lequel la lame (240) est symétrique en section transversale le long d'une ligne bissectrice avec la longueur de la lame.

23. Hachoir pour produit alimentaire de la revendication 1, dans lequel la lame (240) présente des coins émoussés.

24. Hachoir pour produit alimentaire de la revendication 1 , comprenant en outre un système de guidage de lame ayant un guide de lame avec une fente correspondant à la forme de section transversale de la lame (240).

25. Hachoir pour produit alimentaire de la revendication 24, comprenant en outre un racloir de guide de lame (246), le racloir de guide de lame définissant une courbe conforme à l'invention pour retirer ou évacuer des produits alimentaires.

26. Hachoir pour produit alimentaire de la revendication 1, comprenant en outre une coupelle (114) fixée de manière amovible à une extrémité distale (212) de la partie de corps (104).

27. Hachoir pour produit alimentaire de la revendication 26, comprenant en outre un tampon de coupelle (258) engagé de manière amovible avec la coupelle (114).

28. Hachoir pour produit alimentaire de la revendication 27, dans lequel le tampon de coupelle (258) comprend une surface (259) et un organe d'engagement (270) fixé à la surface.

29. Hachoir pour produit alimentaire de la revendication 27, dans lequel le tampon de coupelle (258) définit une première collerette annulaire (266) configurée pour s'engager de manière amovible avec un premier bord (262) de la coupelle (114).

30. Hachoir pour produit alimentaire de la revendication 29, dans lequel le tampon de coupelle (258) définit une seconde collerette annulaire (268) configurée pour s'engager de manière amovible avec un second bord (264) de la coupelle (114).

31. Hachoir pour produit alimentaire de la revendication 27, dans lequel le tampon de coupelle (258) présente une épaisseur comprise entre environ 0,125 pouces et 0,5 pouces.

32. Hachoir pour produit alimentaire de la revendication 27, dans lequel le tampon de coupelle (258) comprend une surface généralement molle.

33. Hachoir pour produit alimentaire de la revendication 28, dans lequel la surface absorbe les chocs.

34. Hachoir pour produit alimentaire de la revendication 28, dans lequel la surface est déformable.

35. Hachoir pour produit alimentaire de la revendication 28, dans lequel la surface est récupérable.

36. Hachoir pour produit alimentaire de la revendication 27, dans lequel le tampon de coupelle (258) est lavable.

37. Procédé d'utilisation d'un hachoir pour produit alimentaire (100) comprenant la poussée vers le bas appliquée sur un assemblage de couvercle (102) du hachoir pour produit alimentaire (100),le hachoir pour produit alimentaire comprenant
une partie de corps (104) ayant un corps tubulaire (154);
un assemblage de couvercle (102) fixé en coulissement à une première face du corps tubulaire pour le mouvement coulissant par rapport à la partie de corps (104);
un chariot (156) fixé coulissant à une seconde face du corps tubulaire (154) pour un mouvement coulissant hélicoïdal par rapport à la partie de corps (104),
un piston (159) fixé en rotation à l'assemblage de couvercle (102) et au chariot (156) pour le mouvement coulissant par rapport à la partie de corps et pour le mouvement de rotation par rapport à l'assemblage de couvercle et la partie de corps ; et
une lame (240) fixée au piston (159); et
la libération de l'assemblage de couvercle (102),
dans lequel la poussée vers le bas de l'assemblage de couvercle (102) permet à la lame (240) de coulisser vers le bas par rapport à la partie de corps (104) et dans lequel la libération de l'assemblage de couvercle (102) permet à la lame de coulisser vers le haut par rapport à la partie de corps et permet à la lame de tourner par rapport à la partie de corps et de l'assemblage de couvercle.

38. Procédé pour verrouiller un hachoir pour produit alimentaire (100), comprenant
la poussée vers le bas appliquée sur un assemblage de couvercle (102) du hachoir pour produit alimentaire , le hachoir alimentaire comprenant
une partie de corps (104) ayant un corps tubulaire (154);
l'assemblage de couvercle (102) fixé en coulissement à une première face du corps tubulaire (154) pour le mouvement coulissant par rapport à la partie de corps, l'assemblage de couvercle étant monté en rotation sur un piston (159),
une lame fixée (240) fixée au piston (159); et
une bague de verrouillage (222) fixée en rotation à une extrémité proximale de la partie de corps (104) pour un mouvement rotationnel par rapport à la partie de corps, la bague de verrouillage ayant un bouton de verrouillage (232) configuré pour tourner entre une position ouverte et une position fermée à l'intérieur d'une ouverture de fenêtre de la partie de corps (104),
rotation du bouton de verrouillage (232) de la position d'ouverture à la position de fermeture,
dans lequel la rotation du bouton de verrouillage (232) de la position ouverte dans la position fermée évite le coulissement de l'assemblage de couvercle (102) vers le haut par rapport à la partie de corps (104) au moment de la libération de l'assemblage de couvercle (102).

39. Procédé de déblocage d'un hachoir pour produit alimentaire (100) comprenant :
la rotation d'un bouton de blocage (232) du hachoir pour produit alimentaire d'une position fermée vers une position ouverte, le hachoir pour produit alimentaire comprenant
une partie de corps (104) ayant un corps tubulaire (154);
un assemblage de couvercle (102) fixé en coulissement à une première face du corps tubulaire (154) pour le mouvement coulissant par rapport à la partie de corps, l'assemblage de couvercle étant monté en rotation sur un piston (159),
une lame (240) fixée au piston (159); et
une bague de verrouillage (222) fixée en rotation à une extrémité proximale de la partie de corps (104) pour un mouvement rotationnel par rapport à la partie de corps, la bague de verrouillage ayant le bouton de verrouillage (232) configuré pour tourner entre la position ouverte et la position fermée à l'intérieur d'une ouverture de fenêtre de la partie de corps (104),
dans lequel la rotation du bouton de verrouillage (232) de la position ouverte dans la position fermée évite le coulissement de l'assemblage de couvercle (102) vers le haut par rapport à la partie de corps (104).
